# EUROPEAN PATENT SPECIFICATION

(11) **EP 1 650 244 B1**
(45) Date of publication and mention of the grant of the patent: **20.06.2007**
(21) Application number: 05021979.9
(22) Date of filing: 08.10.2005
(51) Int. Cl.: C08G 18/78, C08G 18/79, C08G 18/80

(54) **Blocked biuretized isocyanates**
Blockierte biuretisierte Polyisocyanate
Polyisocyanates ayant une structure de biuret bloqués

(30) Priority: 21.10.2004 US 970771
(43) Date of publication of application: 26.04.2006
(73) Proprietor: Bayer MaterialScience LLC, Pittsburgh PA 15205 (US); Bayer MaterialScience AG, 51368 Leverkusen (DE)
(72) Inventor: Roesler, Richard R., Wexford, PA 15090-7583 (US); Berezkin, Yuliya, Pittsburgh, PA 15241 (US); Kinney, Carol L., Eighty Four, PA 15330-0583 (US); Martin, Kyli, Bridgeville, PA 15017-1097 (US); Shaffer, Myron W., New Cumberland, WV 26047-9769 (US); Yu, Poli C., Pugong-Shanghai 201206 (CN); Greszta-Franz, Dorota, 40699 Erkrath (DE); Halpaap, Reinhard, 51519 Odenthal (DE); Petzoldt, Joachim, 40789 Monheim (DE)
(74) Representative: Klimiuk, Meike

(56) References cited:
- EP-A- 0 600 314
- US-A- 4 659 770
- US-A- 6 051 675
- US-A1- 2003 109 664

## Description

The biuretization of isocyanates is known in the art. U.S. patents 3,903,127 and 3,976,622 describe a variety of different biuretizing agents, including primary aliphatic amines. Canadian published application 2,211,025 describes the use of tertiary alcohols or a mixture of water and a tertiary alcohol to biuretize an isocyanate. Finally, U.S. patent 4,220,749 describes the use of secondary monoamines as biuretizing agents. All three references describe the use of hexamethylene diisocyanate as the starting isocyanate.

The use of polyisocyanates curing agents for coating compositions is also known, with polyisocyanates having isocyanate functionalities of 3 or higher being particularly preferred. U.S. Patent Application Publication 2003/0109664 describes the production of a higher functional polyisocyanate by biuretizing an isocyanaurate-group containing polyisocyanate. Among the starting isocyanates described is a trimer of hexamethylene diisocyanate. The biuretizing agent used is water. The application indicates that when compared to isocyanates biuretized with t-butanol or a mixture of t-butanol and water, the trimer-containing isocyanates biuretized with water only, exhibited improved color. The application also broadly suggests that the isocyanate groups of biuretized isocyanates can be blocked e.g. with alcohols, ketimines or oximes. Although the biuretized isocyanates described in the application are an improvement over the prior art biuretized isocyanates, it would be desirable to improve the gel content and mar resistance of coatings prepared from such isocyanates.

A wide variety of blocking agents are known in the art (see, e.g., "Blocked Isocyanates in Coatings," Potter et al, presented at the WaterBorne & Higher-Solids Coatings Symposium, New Orleans, February 1986. Among the blocking agents described are i) phenol, cresols and long aliphatic chain substituted phenols (such as isononylphenol), ii) amides (such as ε-caprolactam), iii) oximes (such as butanoneoxime), iv) active methylene group-containing compounds (such as malonates and aectoacetates) and v) sodium bisulfite. Various blocking agents are also described, e.g., in U.S. patents 4,324,879, 4,439,593, 4,495,229, 4,518,522, 4,667,180, 5,071,937, 5,705,593, 5,780,541, 5,849,855, 6,051,675, 6,060,573, 6,274,693, 6,368,669 and 6,583,216.

More recently, secondary amines such as N-benzyl-tert-butylamine (published European patent application 1,375,551, corresponding to U.S. patent application serial number 10/459,033, filed on June 10, 2003) and 3-tert-butylamino methyl proprionate (published PCT patent application WO 2005/000936, corresponding to U.S. patent application serial number 10/874,716, filed June 23 , 2004) have been described as useful blocking agents.

The present invention is directed to a blocked biuret group-containing polyisocyanate composition having a blocked isocyanate functionality of at least 4 prepared by a process comprising
A) reacting a polyisocyanate adduct which
   A) reacting a polyisocyanate adduct which
      a) is prepared from an aliphatic and/or cycloaliphatic diisocyanate,
      b) has an average isocyanate functionality of at least 2.5,
         and
      c) which contains isocyanurate groups,
         with a biuretizing agent to incorporate biuret groups into said polyisocyanate, and
   B) reacting the biuret-containing polyisocyanate with a blocking agent selected from the group consisting of di-C₁-C₁₂-alkyl and/or alkoxyalkyl malonates and acetoacetic acid C₁-C₁₂₋alkyl and/or alkoxyalkyl esters.

Suitable starting polyisocyanates for preparing the polyisocyanates of the present invention are polyisocyanate adducts which
a) are prepared from aliphatic and/or cycloaliphatic diisocyanates, preferably aliphatic diisocyanates and more preferably 1,6-hexamethylene diisocyanate;
b) have an average isocyanate functionality of at least 2.5, preferably at least 2.8 and more preferably at least 3.0; and
c) contain isocyanurate groups.

The starting polyisocyanate adducts preferably have an NCO content of 10 to 25% by weight, more preferably 12 to 25% by weight and most preferably 15 to 25% by weight; and preferably have an upper limit for the functionality of 8, more preferably 7 and most preferably 6. The starting material to prepare the polyisocyanate adducts preferably contains at least 70% by weight, more preferably at least 80% by weight and most preferably at least 90% by weight of an aliphatic diisocyanate, and most preferably 1,6-hexamethylene diisocyanate.

Starting polyisocyanate adducts containing isocyanurate groups are known and may be prepared in accordance with the teachings of U.S. patent 4,324,879, herein incorporated by reference. In the present invention, these adducts are generally preferred as the starting materials. Useful examples of such polyisocyanate adducts containing isocyanurate groups are trimers formed from an aliphatic and/or cycloaliphatic diisocyanate. Trimers of aliphatic diisocyanates, such as the trimer of 1,6-hexamethylene diisocyanate which is sold under the tradename Desmodur N3390, from Bayer Polymers LLC, are most preferred.

Substantially any aliphatic and/or cycloaliphatic diisocyanate can be used to form the starting polyisocyanate adduct. Useful diisocyanates include, without limitation, 1,6-hexamethylene diisocyanate, bis-cyclohexyl diisocyanate, 1,4-cyclohexyl diisocyanate, bis-(4-isocyanatocyclohexyl)-methane, 3-isocyanatomethyl-3,5,5-trimethylcyclohexylisocyanate ("isophorone diisocyanate") and the like.

To prepare the polyisocyanates containing biuret groups according to the present invention the starting polyisocyanate adducts are reacted in the presence of a biuretizing agent of the type known in the art. Such biuretizing agents include water, secondary monoamines and tertiary alcohols. The use of water as a biuretizing agent is described in U.S. Patents 3,124,605 and 3,903,127, the disclosures of which are herein incorporated by reference.

The preparation of biuretized isocyanates using secondary monoamines is described in U.S. patents 4,220,749, the disclosure of which is hereby incorporated by reference. In general, the secondary amines are of the general formula: (R₁)(R₂ )NH, where R₁ and R₂ may be the same or different and represent an aliphatic hydrocarbon radical containing from 1 to 20 carbon atoms. Specific useful secondary monoamines include dimethylamine, diethylamine, dipropylamine, dibutylamine, bis-(2-ethylhexyl)-amine. The isocyanate and amine are reacted at an isocyanate to amine equivalent ratio of from about 4:1 to about 14:1 to incorporate biuret groups into said polyisocyanate. The reaction is carried out at a temperature of from about 0 to 140°C, preferably 60 to 140°C and more preferably 70 to 140°C.

Finally, the use of tertiary alcohols and mixtures of tertiary alcohols and water are described in Canadian published application 2,211,025, the disclosure of which is hereby incorporated by reference.

The resulting biuret-group containing polyisocyanate has an isocyanate functionality of at least 4, preferably at least 4.5 and more preferably at least 4.8 and an NCO content of from about 8 to about 24% by weight, preferably from about 10 to about 22% by weight and more preferably from about 10 to about 20% by weight, based on the weight of the polyisocyanate. The resulting polyisocyanates preferably have a maximum functionality of 10, more preferably 8 and most preferably 7. The products can be suitably reduced in solvent for use.

The molecular weight of the product is calculated by GPC using polystyrene as the standard. The resulting biuret-group containing polyisocyanate has a number average molecular weight of from about 500 to about 10,000, preferably from about 500 to about 5,000 and most preferably from about 500 to about 3,000.

Using the process of the invention, the biuret group-containing polyisocyanate can be prepared either continuously or batchwise.

The products obtained by this process are distinguished in particular in that they couple comparatively low viscosity and low molecular weight with a high isocyanate functionality and a high reactivity with respect to binders employed in coatings, said binders containing isocyanate-reactive groups and being, for example, hydroxyl-containing polyacrylates. Other advantages are that they are easy to prepare, the content of volatile isocyanates do not rise even on prolonged storage as these compounds are stable to breakdown to monomer, they contain standard isocyanate groups which do not require additional regulatory clearance, and that the products are storage stable with respect to viscosity increases and are substantially colorless, which is especially important for clear coat systems.

The products obtained by the process are then blocked with a blocking agent selected from the group consisting of di-C₁-C₁₂-alkyl and/or alkoxyalkyl malonates and acetoacetic acid C₁-C₁₂-alkyl and/or alkoxyalkyl esters. Specifically useful malonates include diethyl malonate, dimethyl malonate, diisopropyl malonate, di(n-propyl)malonate, di(n-butyl)malonate, ethyl(n-butyl)malonate, methyl(n-butyl)malonate and the like. Specifically useful acetoacetic acid esters are methyl-, ethyl-, propyl-, butyl-, pentyl-, hexyl-, heptyl-, octyl-, nonyl-, decyl-, or dodecyl acetoacetate. Preferred acetoacetic acid alkyl and/or alkoxyalkyl esters are those alkyl acetoacetates having from 1 to 6 carbon atoms in the alkyl group. Diethyl malonate and ethyl acetoacetate are the most preferred blocking agents. Further examples of useful malonates and acetoacetic acid esters can be found, e.g., in U.S. patents 4,439,593; 4,518,522; 4,677,180; 5,071,937; 5,780,541; 5,849,855; 6,060,573; and 6,274,693. In general, the reaction is conducted at a temperature of less than 120°C and preferably at a temperature of from 40°C to 80°C. Known catalysts are added in order to maintain a slight exotherm. The reaction takes from about 2 hours to about 6 hours after catalyst addition. Ideally the ratio of materials would be 1 equivalent of blocking agent for each isocyanate equivalent. In practice the ratio is 1±0.05 equivalents of blocking agent per isocyanate equivalent.

The products of the invention are particularly suitable as curing agents in coating compositions, especially in automotive coatings. The coating compositions of this invention generally contain a film forming binder which comprises an isocyanate-reactive oligomer or polymer or dispersed gelled polymer, and the blocked biuret group-containing polyisocyanate curing agent as described above.

As indicated above, the coating composition is particularly suited for use as a clear coat in automotive refinishing and finishing but can be pigmented with conventional pigments and used as a monocoat or as basecoat or even as an undercoat such as a primer or sealer. These coatings may also be used in nonautomotive applications such as in industrial and architectural applications.

It has also been found that coatings prepared form the blocked isocyanates of the invention exhibit improved cure as shown by increased gel content at lower cure temperatures when compared to similar products made from other blocking agents. In addition, coatings from the blocked isocyanates of the present invention exhibit improved scratch and mar resistance.

In the examples which follow, all parts and per cents are by weight unless otherwise indicated and the following materials were used:
DESMO 800 - Desmophen 800 - a polyester with OH content of 8.8%, 100% solids and viscosity of about 170,000 cps, available from Bayer MaterialScience.
CGL - CGL-052 L2 - an hydroxyl functional triazine based hindered amine light absorber from Ciba Specialty Chemicals, supplied at 60% solids in PM acetate (propylene glycol momomethylether acetate).
T-928 - Tinuvin 928 - hydroxyphenyl benzotriazole based UV-absorber from Ciba Specialty Chemicals.
Bay OL - Baysilone OL-017 - a polyether-modified methyl polysiloxane available from Borchers and sold as a flow promoter.
n-BA/PMA/EEP - a 4:5:6 blend of n-butyl acetate (CAS# 123-86-4), PM acetate (CAS# 108-65-6, also known as propylene glycol monomethyl ether acetate) and Ektapro EEP from Eastman (CAS# 763-69-9, also known as ethyl 3-etholypropionate).

### EXAMPLES

In the examples, Example 3 is a comparative example.
Polyiso 1 - Into a five liter round bottom flask fitted with stirrer, nitrogen inlet, thermocouple and heater were added 2550 parts (13.14 eq) of Desmodur N 3300 polyisocyanate (a solvent-free hexane diisocyanate trimer having an NCO content of about 22% by weight and a viscosity of about 2500 mPa·s at 25°C, available from Bayer MaterialScience LLC), 450 parts of butyl acetate, 0.128 parts of dibutyl phosphate catalyst and 16.60 parts (0.92 eq) of distilled water and mixed until homogenous. The reaction was heated for one hour at 65°C, then for one half hour at 90°C, then for one half hour at 120°C, and finally seven hours at 140°C. At the end of the heating period, the reaction was cooled to room temperature. The isocyanate content was 14.52% by weight (14.16% theoretical). The viscosity at 25°C was 6,800 cps. Functionality was approximately six isocyanates per molecule.
Polyiso 2 - Into a five liter round bottom flask fitted with stirrer, nitrogen inlet, thermocouple and heater were added 2500 part (12.88 eq) of Desmodur N 3300 polyisocyanate , 700 parts of butyl acetate, 5 parts of dibutyl phosphate catalyst and 297 parts (2.30 eq) of N,N-dibutyl amine and mixed until homogenous. The reaction was heated for one hour at 65°C, then for one half hour at 90°C, then for five hours at 120°C, and finally for and two hours at 140°C. At the end of the heating period, the reaction was cooled to room temperature. The isocyanate content was 10.5% by weight (10.0% theoretical). The viscosity at 25°C was 1,980 cps. Functionality was approximately six isocyanates per molecule.
Blocked Iso 1 - Into a two liter round bottom flask fitted with stirrer, nitrogen inlet, thermocouple, heater and addition funnel were added 405.0 parts (1.40 eq) of Polyiso 1, 104.4 parts (0.71 eq) of diethyl malonate, 92.9 parts (0.71 eq) of ethyl acetoacetate and 142.8 parts of butyl acetate and mixed until homogeneous. The reaction mixture was heated to 50°C when the catalyst (1.72 parts of a 30% sodium methoxide in methanol and 10 parts of diethyl malonate) was added dropwise. The reaction exotherm resulted in a temperature of 68°C. The reaction was heated to 80°C and held for one and one half hours when the isocyanate content was zero by titration. 142.7 parts of n-butanol were added. 4 parts of dibutyl phosphate were then added to neutralize the solution. The viscosity at 25°C was 2,085 cps. The density was 8.81 lbs/gal. The calculated isocyanate content was 7.41% and the NCO equivalent weight was 567.
Blocked Iso 2 - Into a two liter round bottom flask fitted with stirrer, nitrogen inlet, thermocouple, heater and addition funnel were added 243.4 parts (0.79 eq) of Polyiso 2, 64.1 parts (0.4 eq) of diethyl malonate, 51.4 parts (0.40 eq) of ethyl acetoacetate and 120 parts of butyl acetate and mixed until homogenous. The reaction mixture was heated to 35°C when the catalyst (0.96 parts of a 30% sodium methoxide in methanol and 10.95 parts of diethyl malonate) was added dropwise. The reaction exotherm resulted in a temperature of 68°C. The reaction was heated to 70°C and held for two and one half hours when the isocyanate content was zero by titration. 65 parts of n-butanol were added. 4 parts of dibutyl phosphate were then added to neutralize the solution. The viscosity at 28°C was 63 cps. The density was 8.36 lbs/gal. The calculated isocyanate content was 6.08% and the NCO equivalent weight was 690.
Blocked Iso 3 - Desmodur BL XP 2434 - a commercially available diethyl malonate blocked trimer (biuret group-free) from Bayer MateriaIScience LLC, having a blocked isocyanate group content of 7.0%, an NCO equivalent weight of 600, 65% solids and a viscosity of 3000 cps at 25°C.

Table 1 below sets forth the coating compositions tested and Tables 2 through 5 set forth the results obtained therefrom. The compositions were applied using a Binks 95 type siphon gun to a wet film build of approximately 4 mils. After flashing for 15 minutes, the panels were cured according to their desired temperature ranges.

The tests conducted were the following:
MEK Double Rubs: a 2 pound ball peen hammer is wrapped with several layers of cheesecloth. The cloth is saturated with MEK. The hammer is placed at a 90 degree angle to the surface and moved back and forth over a 4" area. The cloth is re-saturated with MEK every 25 rubs. The test is run until the coating is damaged or until 200 rubs are reached. The number of rubs needed for coating damage is recorded.
Gel Content: Coating free films of a known weight are placed in stainless steel wire screens. These are then placed in boiling acetone for 7 hours to remove any extractable materials. The coating films are then re-weighed to determine and report total weight solids retention.
Pendulum Hardness: Coated glass panels are placed on a Koenig Pendulum Hardness tester and the number of swings of the pendulum before its angle of deflection becomes too low is recorded. All coatings are compared to the hardness of glass (172-185 swings).
Scratch and Mar: Run on an Atlas AATCC crockmeter, model CM-5. A wool felt cloth (Atlas 14-9956-00) was placed directly on the acrylic finger.

Bon Ami cleanser was then applied to the coated panel and excess tapped off. Ten back and forth rubs were done on the coated panel followed by washing and drying of the panel. Mar resistance was determined by percentage retention of 20 gloss when read perpendicular to direction of rubs.

**Table 1**

| Example | 1 | 2 | 3 |
|---|---|---|---|
| Isocyanate | Blocked Iso 1 | Blocked Iso 2 | Blocked Iso 3 |
| pbw, isocyanate | 468.79 | 440.85 | 392.52 |
| pbw, Desmo800 | 143 | 154.32 | 128.78 |
| pbw, CGL6.74 | 6.74 | 6.77 | 6.89 |
| pbw, T-92840.42 | 40.42 | 40.6 | 41.33 |
| pbw, Bay OL | 4.17 | 4.19 | 4.26 |
| pbw, n-BA/PMA/EEP | 159.48 | 190.56 | 249.12 |

**Table 2**

| Example | 1 | 2 | 3 |
|---|---|---|---|
| Cure temp, °F, double rubs | | | |
| 175 | 11 | 5 | 4 |
| 194 | 22 | 11 | 18 |
| 212 | 57 | 28 | 43 |
| 230 | 22 | 29 | 36 |
| 248 | 66 | 57 | 65 |

**Table 3**

| Example | 1 | 2 | 3 |
|---|---|---|---|
| Cure temp, °F, gel | | | |
| 175 | 58.4 | 0 | 0.7 |
| 194 | 79.8 | 56.8 | 47.2 |
| 212 | 87.7 | 81.6 | 75.9 |
| 230 | 94.5 | 87.3 | 75.9 |
| 248 | 94.7 | 94 | 77 |

**Table 4**

| Example | 1 | 2 | 3 |
|---|---|---|---|
| Cure temp, °F, hard | | | |
| 175 | tacky | 2 | 9 |
| 194 | 5 | 4 | 32 |
| 212 | 7 | 4 | 66 |
| 230 | 22 | 5 | 81 |
| 248 | 31 | 17 | 74 |

**Table 5**

| Example | 1 | 2 | 3 |
|---|---|---|---|
| Cure temp, °F, scratch | | | |
| 175 | 21.9 | 0.9 | 6.7 |
| 194 | 79.2 | 82.9 | 36.3 |
| 212 | 99.4 | 95.2 | 78.6 |
| 230 | 99.8 | 93.8 | 82.8 |
| 248 | 99 | 99.3 | 79.3 |

## Claims

1. A blocked biuret group-containing polyisocyanate composition having a blocked isocyanate functionality of at least 4 prepared by a process comprising
A) reacting a polyisocyanate adduct which
a) is prepared from an aliphatic and/or cycloaliphatic diisocyanate
b) has an isocyanate functionality of at least 2.5 and
c) which contains isocyanurate groups, with a biuretizing agent to incorporate biuret groups into said polyisocyanate, and
B) reacting the biuret-containing polyisocyanate with a blocking agent selected from the group consisting of di-C₁-C₁₂-alkyl and/or alkoxyalkyl malonates and acetoacetic acid C₁-C₁₂-alkyl and/or alkoxyalkyl esters.

2. The composition of Claim 1, wherein said adduct has an isocyanate functionality of at least 2.8.

3. The composition of Claim 2, wherein said adduct has an isocyanate functionality of at least 3.0 and an isocyanate functionality of no more than 8.

4. The composition of Claim 1, wherein component A)a) is an aliphatic diisocyanate.

5. The composition of Claim 1, wherein said biuretizing agent is selected from the group consisting of water, secondary amines and tertiary alcohols,

6. The composition of Claim 1, wherein said blocking agent is a malonate selected from the group consisting of diethyl malonate, dimethyl malonate, diisopropyl malonate, di(n-propyl)malonate, di(n-butyl)malonate, ethyl(n-butyl)malonate and methyl(n-butyl)malonate.

7. The composition of Claim 1, wherein said blocking agent is an acetoacetic acid ester selected from the group consisting of are methyl-, ethyl-, propyl-, butyl-, pentyl-, hexyl-, heptyl-, octyl-, nonyl-, decyl-, and dodecyl acetoacetate.

## Patentansprüche

1. Blockierte biuretgruppenhältige Polyisocyanat-Zusammensetzung mit einer Funktionalität von blockiertem Isocyanat von zumindest 4, die durch ein Folgendes umfassendes Verfahren hergestellt wird:
A) Umsetzen eines Polyisocyanataddukts, das
a) aus einem aliphatischen und/oder cycloaliphatischen Diisocyanat hergestellt wurde,
b) eine Isocyanatfunktionalität von zumindest 2,5 aufweist und
c) Isocyanuratgruppen enthält,
mit einem Biuretisierungsmittel, um Biuretgruppen in das Polyisocyanat zu inkorporieren, und
B) Umsetzen des biurethältigen Polyisocyanats mit einem Blockiermittel, das aus der aus Di-C₁-C₁₂-alkyl- und/oder -alkoxyalkylmalonaten und Acetessigsäure-C₁-C₁₂-alkyl- und/oder -alkoxyalkylestern bestehenden Gruppe ausgewählt ist.

2. Zusammensetzung nach Anspruch 1, worin das Addukt eine Isocyanatfunktionalität von zumindest 2,8 aufweist.

3. Zusammensetzung nach Anspruch 2, worin das Addukt eine Isocyanatfunktionalität von zumindest 3,0 und eine lsocyanatfunktionalität von nicht mehr als 8 aufweist.

4. Zusammensetzung nach Anspruch 1, worin Komponente A)a) ein aliphatisches Diisocyanat ist.

5. Zusammensetzung nach Anspruch 1, worin das Biuretisierungsmittel aus der aus Wasser, sekundären Aminen und tertiären Alkoholen bestehenden Gruppe ausgewählt ist.

6. Zusammensetzung nach Anspruch 1, worin das Blockiermittel ein Malonat ist, das aus der aus Diethylmalonat, Dimethylmalonat, Diisopropylmalonat, Di(n-propyl)-malonat, Di(n-butyl)malonat, Ethyl(n-butyl)malonat und Methyl(n-butyl)malonat bestehenden Gruppe ausgewählt ist.

7. Zusammensetzung nach Anspruch 1, worin das Blockiermittel ein Acetessigsäureester ist, der aus der aus Methyl-, Ethyl-, Propyl-, Butyl-, Pentyl-, Hexyl-, Heptyl-, Octyl-, Nonyl-, Decyl- und Dodecylacetacetat bestehenden Gruppe ausgewählt ist.

## Revendications

1. Composition de polyisocyanate bloqué contenant un groupement biuret ayant une fonctionnalité d'isocyanate bloquée d'au moins 4 préparée par un procédé comprenant :
A) la réaction d'un adduit de polyisocyanate qui
a) est préparé à partir d'un diisocyanate aliphatique et/ou cycloaliphatique
b) a une fonctionnalité isocyanate d'au moins 2,5 et
c) qui contient des groupements isocyanurate,
avec un agent formant du biuret pour incorporer des groupements biuret dans ledit polyisocyanate, et
B) la réaction du polyisocyanate contenant le biuret avec un agent bloquant choisi parmi le groupe constitué de malonates de di(alkyle en C₁-C₁₂) et/ou de malonate d'alkoxyalkyle et d'esters d'alkyle en C₁-C₁₂ et/ou d'alkoxyalkyle d'acide acétoacétique.

2. Composition selon la revendication 1, dans laquelle ledit adduit a une fonctionnalité isocyanate d'au moins 2,8.

3. Composition selon la revendication 2, dans laquelle ledit adduit a une fonctionnalité isocyanate d'au moins 3,0 et une fonctionnalité isocyanate de pas plus de 8.

4. Composition selon la revendication 1, dans laquelle le composant A)a) est un diisocyanate aliphatique.

5. Composition selon la revendication 1, dans laquelle ledit agent formant du biuret est choisi parmi le groupe constitué de l'eau, d'amines secondaires et d'alcools tertiaires.

6. Composition selon la revendication 1, dans laquelle ledit agent bloquant est un malonate choisi parmi le groupe constitué du malonate de diéthyle, du malonate de diméthyle, du malonate de diisopropyle, du malonate de di(n-propyle), du malonate de di(n-butyle), du malonate d'éthyle n-butyle et du malonate de méthyle n-butyle.

7. Composition selon la revendication 1, dans laquelle ledit agent bloquant est un ester d'acide acétoacétique choisi parmi le groupe des acétoacétates de méthyle, éthyle, propyle, butyle, pentyle, hexyle, heptyle, octyle, nonyle, décyle et dodécyle.
